# EUROPÄISCHE PATENTSCHRIFT

(11) **EP 2 759 349 B1**
(45) Veröffentlichungstag und Bekanntmachung des Hinweises auf die Patenterteilung: **27.04.2016**
(21) Anmeldenummer: 14161291.1
(22) Anmeldetag: 14.09.2011
(51) Int. Cl.: B09C 1/02

(54) **System und Verfahren zur geschlossenen Flüssigkeitskreislaufführung**
System and method for conveying liquid in a closed circuit
Système et procédé de guidage de liquide en circuit fermé

(43) Veröffentlichungstag der Anmeldung: 30.07.2014
(62) Teilanmeldung aus: 11181198.0
(73) Patentinhaber: Luxin (Green Planet) AG, 6004 Luzern (CH)
(72) Erfinder: Glanzmann, Arthur, 6004 Luzern (CH)
(74) Vertreter: Kiwit, Benedikt

(56) Entgegenhaltungen:
- EP-A1- 2 058 441
- WO-A1-96/00624
- US-A- 5 622 864
- US-A- 5 665 245

## Beschreibung

Die Erfindung betrifft ein offenes System sowie ein Verfahren zur geschlossenen Flüssigkeitskreislaufführung.

Beispielsweise bei der Amalgammethode zum Auswaschen von Gold wird reines Quecksilber eingesetzt, welches die Goldpartikel umschließt und als Amalgamklumpen zurückbleibt. Ein Teil des Quecksilbers bleibt dabei an dem auszuwaschenden Material, beispielsweise Flusssedimente, haften und gelangt dann, in der Regel ohne zusätzliche Behandlung, mit dem übrigen Bodenmaterial zurück in die Umwelt.

Ein weiteres Beispiel ist Rotschlamm, welcher ein Abfallprodukt der Aluminiumherstellung ist. Der Rotschlamm fällt als Rest bei der Extraktion von Aluminium in der Aluminiumherstellung an und ist stark alkalisch. Noch heute gibt es Regionen, wo der Rotschlamm ohne besondere Vorkehrungen deponiert oder in die Umwelt geleitet wird. In der Regel wird der Schlamm jedoch in Deponien gelagert. Die als Dispersion vorliegenden Hydroxide und Silikate setzten sich sodann ab und die austretende Natronlauge wird wiederverwertet. Dieser Prozess ist sehr zeitintensiv.

Ein Verfahren zur Behandlung von Kontaminierter Erde ist in WO 96/00624 offenbart.

Es ist nunmehr eine Aufgabe der Erfindung, ein offenes System und ein Verfahren zur geschlossenen Flüssigkeitskreislaufführung bereitzustellen, bspw. zum Behandeln eines Materials mit einem flüssigen Behandlungsmedium, mit dem ein umweltschonender, effektiver und effizienter Einsatz ermöglicht wird.

Diese Aufgabe wird durch die unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird ein offenesSystem zur geschlossenen Flüssigkeitskreislaufführung bereitgestellt, welches aufweist: wenigstens ein flüssigkeitsundurchlässiges und nach außen abgegrenztes Reservoir zum Auffangen von flüssigen Behandlungsmedien, wobei in dem Reservoir ein Material vorgesehen und/oder angeordnet ist, welches mit dem flüssigen Behandlungsmedium zu behandeln ist, wenigstens einen Auffangbehälter, welcher im Reservoir im Wesentlichen in der oder in Nähe der Sohle des Reservoirs angeordnet ist, wobei der Auffangbehälter wenigstens eine Öffnung aufweist, durch die das flüssige Behandlungsmedium fließen kann, wenigstens eine Flüssigkeitsentnahmevorrichtung zur Entnahme des in dem Auffangbehälter gesammelten flüssigen Behandlungsmediums aus dem Reservoir, wenigstens eine Aufbereitungsvorrichtung, die ausgebildet ist, das dem Reservoir entnommene flüssige Behandlungsmedium zur Wiederverwendung in dem System aufzubereiten, und wenigstens eine Rückführvorrichtung, die ausgebildet ist, das aufbereitete flüssige Behandlungsmedium in das Reservoir zurückzuführen.

Das flüssige Behandlungsmedium kann Wasser sein. Sofern im Folgenden von Wasser die Rede ist, ist hierunter, sofern nicht anders angegeben, auch immer allgemein ein flüssiges Behandlungsmedium zu verstehen.

Mittels des erfindungsgemäßen Systems kann es auf einfache Weise verhindert werden, dass die zur Behandlung des Materials in dem flüssigen Behandlungsmedium bzw. Wasser mitgeführten oder bei der Behandlung des Materials mit dem flüssigen Behandlungsmedium bzw. Wasser abgeführten Stoffe oder Materialien (bspw. mitgeführte Chemikalien oder abgeführtes Quecksilber) in die das System umgebende Umwelt gelangen, insbesondere nicht in das Grundwasser. So kann beispielsweise ein mit Quecksilber verunreinigtes Sediment von der Aluminiumherstellung auf einfache Weise von dem Quecksilber befreit werden, ohne dass das Grundwasser unnötig belastet wird. Zudem kann auch das Abführen von Natronlauge in Rotschlamm über den geschlossenen Flüssigkeitskreislauf bzw. Wasserkreislauf auf einfache Weise ermöglicht werden. Als besonders vorteilhaft hat sich erwiesen, dass dieses System für alle Arten von insbesondere wasserverbrauchenden Anlagen, wie beispielsweise industrielle, agrarische, agrarindustrielle, landschaftsbauliche, etc. Anlagen und Anwendungen sowohl im Innenbereich als auch im Außenbereich eingesetzt werden kann. Das flüssigkeits- bzw. wasserundurchlässige und nach außen abgegrenzte Reservoir verhindert dabei, dass belastende Stoffe (beispielsweise Chemikalien und dergleichen) ins Grundwasser gelangen können.

Ein offenes System sowie Anlagen aufweisend das offene System und Anwendungen des offenen Systems ermöglichen somit bspw. eine autarke Wasserversorgung, während gleichzeitig der Austritt des Wassers oder eines anderen flüssigen Behandlungsmediums aus dem System mit möglichen Folgeschäden für die Umwelt vermieden wird, wodurch wiederum ein Verlust von flüssigem Behandlungsmedium, wie Wasser, aus dem System verhindert oder wenigstens minimiert wird, während gleichzeitig das in dem System befindliche flüssige Behandlungsmedium oder Material zu jedweder Nutzung wieder aufbereitet wird und zudem das flüssige Behandlungsmedium und der Flüssigkeit- bzw. Wasserhaushalt im System bewirtschaftet werden kann.

Das flüssige Behandlungsmedium bzw. Wasser kann bevorzugt mit Stoffen oder Materialien versetzt sein, welche der Behandlung des Materials (3) in dem Reservoir (2) dienen und die dem flüssigen Behandlungsmedium bzw. Wasser in der Aufbereitungsvorrichtung (9, 9') zuführbar sind. Somit kann durch Konstanthalten oder wahlweises Anpassen der Konzentration des Stoffes oder Materials in dem flüssigen Behandlungsmedium bzw. Wasser innerhalb des geschlossenen Flüssigkeitskreislaufs zu jeder Zeit eine gleichbleibende bzw. gewünschte Behandlung des Materials in dem Reservoir gewährleistet werden.

Das in dem Reservoir vorgesehene und/oder angeordnete Material kann beispielsweise ein das Reservoir wenigstens teilweise auffüllendes Schüttgut (beispielsweise mit Quecksilber verunreinigtes Sediment oder Rotschlamm) oder ein die Innenwand des Reservoirs wenigstens teilweise bedeckendes Material (beispielsweise Salz in einem Salzstock) sein. Das System ist somit besonderes vielfältig einsetzbar.

Der Auffangbehälter erstreckt sich vorzugsweise in dem Reservoir von dessen Boden nach oben mindestens bis oberhalb des Materials in dem Reservoir, wobei der Auffangbehälter oberhalb des Materials eine zweite Öffnung aufweist, durch die das flüssige Behandlungsmedium einfach entnommen werden kann. Der Auffangbehälter ist vorzugsweise ein Brunnen oder ein spanischer Reiter, so dass eine Entnahme des flüssigen Behandlungsmediums aus dem Reservoir besonders einfach möglich ist.

Die Entnahme des flüssigen Behandlungsmediums aus dem Auffangbehälter kann dadurch vereinfacht werden, in dem die Flüssigkeitsentnahmevorrichtung vorzugsweise wenigstens eine Pumpvorrichtung ist. Die Pumpvorrichtung der Flüssigkeitsentnahmevorrichtung kann dabei entweder in dem Auffangbehälter angeordnet sein und sich über eine Leitung aus dem Reservoir zu der Aufbereitungsvorrichtung hin erstrecken, oder die Pumpvorrichtung ist außerhalb des Reservoirs angeordnet und über eine Leitung mit dem Auffangbehälter strömungstechnisch verbunden. Somit kann ein vorzugsweise automatisches Abpumpen des verunreinigten flüssigen Behandlungsmediums aus dem Auffangbehälter und zu der Aufbereitungsvorrichtung hin ermöglicht werden.

In einer besonders bevorzugten Ausführungsform ist das Reservoir ein Auffangbecken, was den Einsatz des Systems weiter steigert. Das Reservoir ist dabei vorzugsweise wannen- oder halbkugelförmig ausgebildet.

Des Weiteren umfasst das Reservoir wenigstens ein Geotextil. Das Reservoir wird somit auf einfache und robuste Weise flüssigkeitsundurchlässig und nach außen abgegrenzt bereitgestellt.

Ferner ist es denkbar, dass die Aufbereitungsvorrichtung wenigstens eine Reinigungsvorrichtung aufweist, die derart ausgebildet ist, das in dem Reservoir verunreinigte flüssige Behandlungsmedium zu reinigen. Vorzugsweise sind die Verunreinigungen über wenigstens eine Abführleitung aus dem System entnehmbar, beispielsweise zur Wiederverwertung. Im Gegensatz zum Zusetzen von Stoffen oder Materialien in das flüssige Behandlungsmedium umfasst die Aufbereitung hier nunmehr ein Auswaschen bzw. Entfernen eines Stoffes oder Materials, welches mittels des flüssigen Behandlungsmediums aus dem in dem Reservoir befindlichen Material mitgeführt wurde. Dieses kann dann dem flüssigen Behandlungsmedium wiederum in der Aufbereitungsvorrichtung entzogen werden (beispielsweise durch Filtern oder sonstige Reinigungssysteme), so dass das Material beispielsweise zur Wiederverwendung bereitgestellt werden kann, während das flüssige Behandlungsmedium selbst in dem System gereinigt und/oder mit zur Behandlung versetzten Stoffen angereichert werden kann, um im System wiederverwendet zu werden.

Das offene System kann ferner wenigstens eine Zuführleitung aufweisen, über die Beispielsweise flüssiges Behandlungsmedium (bspw. Wasser) oder dem flüssigen Behandlungsmedium zuzusetzende Stoffe oder Materialien von außen zugeführt werden können. Es ist auf diese Weise möglich, den Gehalt an flüssigem Behandlungsmedium (bspw. den Wassergehalt) innerhalb des Systems aufrechtzuerhalten, wenn beispielsweise flüssiges Behandlungsmedium durch Verdunstung verloren geht. Ferner kann durch das Zuführen von dem flüssigen Behandlungsmedium zuzusetzenden Stoffen die Behandlungswirkung des mit diesem Stoff versetzten flüssigen Behandlungsmediums konstant aufrechterhalten bleiben oder in gewünschter Weise eingestellt werden.

Die Aufbereitungsvorrichtung kann fließtechnisch dem Auffangbehälter nachgeschaltet sein, vorzugsweise außerhalb des Reservoirs angeordnet sein.

Ton kann als Filterelement, insbesondere als lose Tonpartikel, in dem System vorgesehen sein, derart, dass die Tonpartikel mit dem Material oder dem das Material behandelnden kontaminierten flüssigen Behandlungsmedium in Verbindung kommt, um in dem Material enthaltene bzw. aus dem Material gewaschene und in dem flüssigen Behandlungsmedium abgeführte Stoffe zu binden.

Das Reservoir kann in Tongestein vorgesehen sein, und/oder wobei die Wände des Reservoirs können mit natürlichem Ton zu Reinigungszwecken des Materials beziehungsweise des zur Behandlung des Materials verwendeten flüssigen Behandlungsmediums versehen sein. Das Tongestein oder der Ton kann derart vorgesehen sein, dass es/er wahlweise abgetragen oder ausgewechselt werden kann.

Der geschlossene Flüssigkeitskreislauf kann derart ausgebildet sein, dass das mittels der Flüssigkeitsentnahmevorrichtung aus dem Auffangbehälter zur Aufbereitungsvorrichtung geleitete flüssige Behandlungsmedium weiter über die Rückführvorrichtung bis zurück in das Reservoir geleitet wird. Die Rückführvorrichtung kann vorzugsweise eine Rückführleitung aufweisen, wobei die Rückführleitung an ihrem der Aufbereitungsvorrichtung abgewandten Ende vorzugsweise eine Düse und/oder ein Ventil aufweist.

Nach einer besonders bevorzugten Ausführungsform ist das System mit natürlichen und/oder künstlich angelegten Flächen und/oder Grünflächen funktional verbunden. Auf diese Weise ist es möglich, das System in einem Umfeld zu integrieren, in dem künstlich geschaffene oder natürliche Begebenheiten, beispielsweise eines Golfplatzes oder einer Parkanlage eines Hotels, als notwendige "Kläranlage" des Systems dienen können. Das System kann somit an jeden denkbaren flüssigkeitsverbrauchenden Komplex als eigenes autonomes Flüssigkeitswirtschafts- und Flüssigkeitsreinigungssystem unter funktionaler Einbeziehung der externen natürlichen oder künstlichen Flächen vorgesehen werden.

Vorzugsweise können die zum System gehörenden Flächen oder Gebiete flüssigkeitstechnisch von ihrem natürlichen Umfeld hermetisch separiert werden, so dass sie autark bewirtschaftet werden können.

Ein Aüsfühzungsbeispiel der Erfindung umfasst ferner eine Anlage für industrielle, agrarische, agrarindustrielle oder landschaftsbauliche Maßnahmen, aufweisend ein offenes System gemäß der Erfindung. Ferner betrifft die Erfindung ein Verfahren zur geschlossenen Flüssigkeitskreislaufführung nach Anspruch 15.

Die Erfindung wird nun anhand von Ausführungsbeispielen beschrieben, die in den Figuren der begleitenden Zeichnungen dargestellt sind.
- Figur 1: zeigt ein offenes System zur geschlossenen Flüssigkeitskreislaufführung gemäß einem ersten Ausführungsbeispiel, und
- Figur 2: zeigt ein offenes System zur geschlossenen Flüssigkeitskreislaufführung gemäß einem zweiten Ausführungsbeispiel.

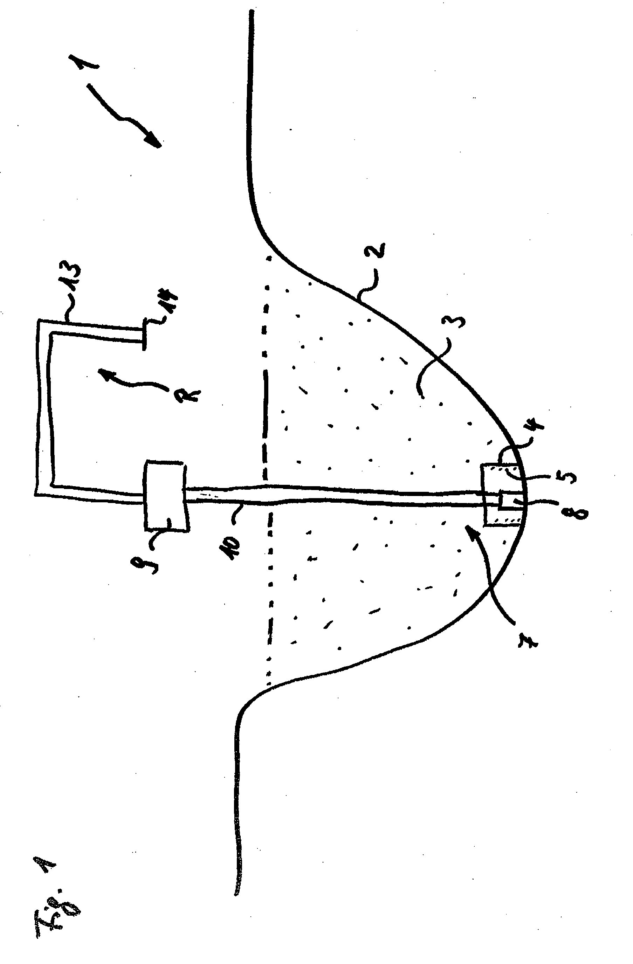

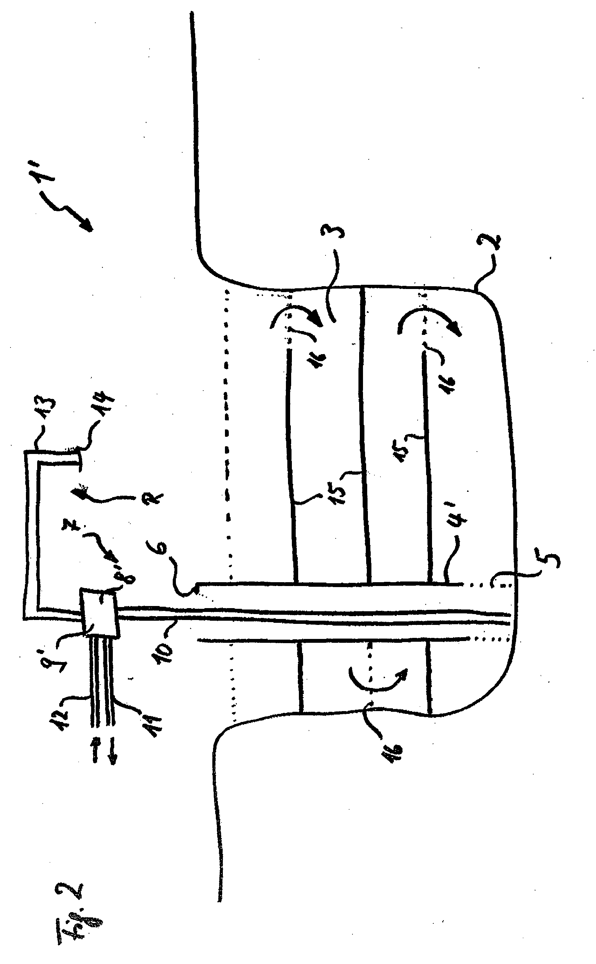

Figuren 1 und 2 zeigen jeweils unterschiedliche Ausführungsformen eines erfindungsgemäßen offenen Systems 1, 1' zur geschlossenen Flüssigkeitskreislaufführung, wobei alle im Folgenden beschriebenen Merkmale und Ausgestaltungsformen der beiden Systeme 1, 1' beliebig miteinander kombiniert werden können. Gleiche Merkmale sind mit denselben Bezugszeichen versehen. Im Weiteren wird zudem beispielhaft Wasser als flüssiges Behandlungsmedium genannt, wobei hierunter auch immer allgemein ein flüssiges Behandlungsmedium zu verstehen ist. Begriffe wie beispielsweise "Wasserkreislauf", "Wasserkreislaufführung", "wasser(un)durchlässig", "Wasserentnahmevorrichtung", "Wasserauffangbehälter" sind im Rahmen der Erfindung folglich allgemein als "Flüssigkeitskreislauf", "Flüssigkeitskreislaufführung", "flüssigkeits(un)durchlässig", "Flüssigkeitsentnahmevorrichtung", "Flüssigkeitsauffangbehälter" zu verstehen.

Das System 1, 1' weist ein im Wesentlichen wasserundurchlässiges (also flüssigkeitsundurchlässiges) und nach außen abgegrenztes Reservoir 2 auf. Auch wenn in den Figuren der begleitenden Zeichnungen jeweils nur ein Reservoir 2 gezeigt ist, so kann das Reservoir 2 auch aus mehreren Reservoirs bestehen, die ganz oder teilweise funktional miteinander verbunden oder voneinander getrennt sein können.

Das Reservoir 2 kann wenigstens ein künstliches oder natürliches Auffangbecken oder wenigstens eine künstliche oder natürliche Höhle, wie beispielsweise von Minen oder Bergwerken, aufweisen. Das Reservoir 2 ist aber grundsätzlich nicht an eine bestimmte Form beschränkt; vielmehr kann das Reservoir 2 jede denkbare Form aufweisen, insbesondere ein Wannen-, Halbkugel- oder Höhlenform. Mit anderen Worten kann das Reservoir 2 jede geeignete Form und/oder Größe aufweisen.

Mittels eines derartigen Reservoirs 2 wird es ermöglicht, dass möglichst kein Wasser aus dem erfindungsgemäßen System 1, 1' in die Umgebung gelangt, insbesondere nicht in tiefere, poröse, wasseranziehende oder wasserleitende Schichten und ins Grundwasser. Somit kann eine Verunreinigung der Umwelt und insbesondere des Grundwassers durch in dem System 1, 1' befindliche (giftige bzw. umweltschädliche) Stoffe oder Materialien vermieden werden.

Das Reservoir 2 hat ferner den Vorteil, dass das erfindungsgemäße System 1, 1' ortsunabhängig, also unabhängig von der geologischen Beschaffenheit, den Klimaverhältnissen und/oder den Bodenverhältnissen vor Ort eingesetzt werden kann. So kann das System 1, 1' beispielsweise für und/oder in allen denkbaren industriellen, agrarischen, agrarindustriellen, landschaftsbaulichen und dergleichen Anlagen und Anwendungen verwendet werden. Ebenso kann das System 1, 1' sowohl im Innen- als auch im Außenbereich beliebig eingesetzt werden.

In dem Reservoir 2 ist ein Material 3 vorgesehen und/oder angeordnet. Dieses Material 3 kann beispielsweise ein das Reservoir 2 wenigstens teilweise auffüllendes Schüttgut, wie beispielsweise ein bei der Goldgewinnung anfallendes, mit Quecksilber verunreinigtes Sediment oder Rotschlamm, oder ein die Innenwand des Reservoirs 2 wenigstens teilweise bedeckendes Material, wie beispielsweis Salz in einem Salzstock, sein. Die Erfindung ist selbstverständlich nicht auf die vorbeschriebenen Materialien beschränkt; vielmehr kann jedes beliebige Material 3 oder auch verschiedene Materialien 3 in dem Reservoir 2 oder an dessen Innenwand oder in sonstiger Weise (auch Kombinationen des Vorgenannten) vorgesehen sein, in der Art, dass es mittels eines geschlossenen Wasserkreislaufs behandelt werden kann.

Zur Behandlung des Materials 3 wird erfindungsgemäß vorzugsweise Wasser verwendet. Allerdings ist die Erfindung nicht auf Wasser als behandelndes Medium begrenzt. So kann der im Rahmen der Anmeldung verwendete Begriff "Wasser" jedes denkbare, vorzugsweise flüssige Behandlungs- bzw. Reinigungsmedium umfassen.

Das erfindungsgemäße System 1, 1' weist ferner wenigstens einen Auffangbehälter 4 auf, welcher im Reservoir im Wesentlichen in der oder in Nähe der Sohle des Reservoirs 2 angeordnet ist. Der Auffangbehälter 4 weist ferner, vorzugsweise in unmittelbarer Nähe des Bodens bzw. der Sohle des Reservoirs 2, wenigstens eine oder mehrere Öffnungen 5 auf, durch die das Wasser in den Auffangbehälter 4 fließen kann; also insbesondere Wasser, welches zur Behandlung des Materials 3 in das System 1, 1', genauer in das Reservoir 2 geleitet wurde. Unter "in der Nähe" wird im Rahmen der Erfindung verstanden, dass sowohl Auffangbehälter 4 als auch dessen Öffnungen 5 derart in dem Reservoir 2 angeordnet sind, dass das durch das Material 3 durchsickernde oder durchgesickerte Wasser sicher und im Wesentlichen vollständig in dem Auffangbehälter 4 gesammelt werden kann.

Vorzugsweise handelt es sich bei der Öffnung 5 um ein Loch oder um einen Schlitz. Die Öffnung 5 kann jedoch auch jede andere geeignete Form und Größe aufweisen, wobei die Form und Größe bei Vorliegen mehrerer Öffnungen 5 gleich sein kann oder sich voneinander unterscheidet. Besonders vorzugsweise kann die Größe der Öffnung 5 wahlweise variiert werden, vorzugsweise stufenlos zwischen einem vollständig geschlossenen und einem vollständig geöffneten Zustand.

Durch die Wahl der Anzahl, Größe und Geometrie der Öffnungen 5 kann die Geschwindigkeit, mit der das Wasser in den Wasserauffangbehälter 4 sickert, variiert werden. Bei der Wahl der Größe und Geometrie der Öffnungen 5 ist darauf zu achten, dass möglichst kein Material 3 in den Wasserauffangbehälter 4 gelangt.

Wie in Figur 1 gezeigt, kann der Auffangbehälter 4 sich lediglich auf dem Boden oder in Bodennähe des Reservoirs 2 erstrecken bzw. angeordnet sein. Es ist jedoch auch möglich, dass der Auffangbehälter 4' sich in dem Reservoir 2 von dessen Boden nach oben erstreckt, vorzugsweise wenigstens bis oberhalb des Materials 3 in dem Reservoir 2 (siehe Figur 2). In diesem Fall weist der Auffangbehälter 4' oberhalb des Materials 3 eine weitere, vorzugsweise verschließbare Öffnung 6 auf, durch die das Wasser in dem Auffangbehälter 4 einfach zugänglich ist und aus dem Reservoir 2 entnommen werden kann. Der Auffangbehälter 4 kann beispielsweise als Brunnen oder auch als spanischer Reiter oder in sonstiger Weise ausgebildet sein. Auch unterschiedliche Ausgestaltungsformen mehrerer Auffangbehälter 4, 4' in einem Reservoir 2 bzw. System 1, 1' ist denkbar.

Das System 1, 1' weist ferner wenigstens eine Wasserentnahmevorrichtung 7 auf, mit der das in dem Auffangbehälter 4, 4' gesammelte Waser aus dem Reservoir 2 entnommen werden kann. Die Wasserentnahmevorrichtung 7 weist vorzugsweise wenigstens ein Pumpvorrichtung 8, 8' auf. Die Pumpvorrichtung 8, 8' kann, wie in Figur 1 gezeigt, beispielsweise in dem Auffangbehälter 4 angeordnet sein. Alternativ oder zusätzlich kann die Pumpvorrichtung 8' auch außerhalb des Reservoirs 2 vorgesehen sein, vorzugsweise oberhalb der Oberfläche des in dem Reservoir 2 befindlichen Materials 3 (siehe Figur 2).

Durch das Abpumpen von Wasser aus dem Auffangbehälter 4 kann die Fließgeschwindigkeit des Wassers durch das gesamte erfindungsgemäße System 1, 1', insbesondere durch das Material 3, variiert werden. So lässt sich auch die Verweilzeit des durch das Material 3 durchsickernden bzw. durchgeleiteten Wassers innerhalb des erfindungsgemäßen Systems 1, 1' variieren, was sich wiederum auf die Qualität der Behandlung durch das flüssige Behandlungsmedium - hier also beispielhaft die Wasserbehandlung - auswirkt. Je nach zu behandelnden Materials 3 kann eine höhere oder eine niedrigere Fließgeschwindigkeit und/oder Verweildauer des Wassers in dem Material 3 von Vorteil sein.

Das System 1, 1' weist ferner wenigstens eine Aufbereitungsvorrichtung 9, 9' auf, die fließtechnisch dem Auffangbehälter 4 nachgeschaltet ist, also stromab des Auffangbehälters 4. Die Aufbereitungsvorrichtung 9, 9' ist dabei vorzugsweise außerhalb des Reservoirs 2, insbesondere oberhalb des Materials 3 angeordnet.

Die Aufbereitungsvorrichtung 9, 9' ist vorzugsweise mittels einer oder mehrerer Leitungen 10 der Wasserentnahmevorrichtung 7 mit dem Auffangbehälter 4, 4' verbunden und diese erstreckt bzw. erstrecken sich vorzugsweise in den Auffangbehälter 4, 4' hinein. Besonders vorzugsweise erstreckt sich die Leitung 10 bis zum Boden oder bis zur Nähe des Bodens des Auffangbehälters 4, 4', um auch geringe, sich im Auffangbehälter 4, 4' angesammelte Wassermengen zu erreichen.

Wie in Figur 1 gezeigt, kann sich die Leitung 10 folglich von der in dem Auffanggehälter 4 befindlichen Pumpvorrichtung 5, durch das Material 3 und aus dem Reservoir 2 heraus bis zur Aufbereitungsvorrichtung 9 erstrecken.

Wie in Figur 2 gezeigt, kann sich die Leitung 10 auch von im Wesentlichen dem Boden des Auffangbehälters 4', also des Reservoirs 2, aus durch den als Brunnen ausgebildeten Auffangbehälter 4' nach oben aus dem Reservoir 2 hinaus bis zur Aufbereitungsvorrichtung 9' erstrecken. In Figur 2 ist die Pumpvorrichtung 8' als eine Einheit mit der Aufbereitungsvorrichtung 9' dargestellt.

Es ist allgemein jedoch denkbar, dass die Pumpvorrichtung 8, 8' auch separat von dem Auffangbehälter 4, 4' und/oder der Aufbereitungsvorrichtung 9, 9' vorgesehen ist. Insbesondere muss sie derart vorgesehen sein, dass die Pumpvorrichtung 8, 8' ein Abpumpen des Wassers aus dem Auffangbehälter 4, 4' und zur Aufbereitungsvorrichtung 9, 9' hin ermöglicht. Dabei kann sie in dem oder außerhalb des Reservoirs 2, genauer in dem oder außerhalb des Auffangbehälters 4, 4', und/oder stromab oder stromauf der Aufbereitungsvorrichtung 9, 9' oder mit dieser zusammen angeordnet bzw. ausgebildet sein.

Die Aufbereitungsvorrichtung 9, 9' ist derart ausgebildet, dass sie das dem Reservoir 2 entnommene Wasser zur Wiederverwendung insbesondere in dem System 1, 1' selbst aufbereiten kann. Dafür kann die Aufbereitungsvorrichtung 9, 9' beispielsweise Filtersysteme oder chemische Aufbereitungssysteme oder sonstige, zur Aufbereitung von Wasser geeigneten Systeme aufweisen.

Die Aufbereitungsvorrichtung 9, 9' kann ferner als Abscheider oder dergleichen ausgebildet sein, um beispielsweise mit dem Wasser mitgeführte Stoffe oder Materialien aus dem Wasser abzuscheiden.

Die Aufbereitungsvorrichtung 9, 9' kann also als Reinigungsvorrichtung ausgebildet sein, mit der das in dem Reservoir 2 verunreinigte Wasser gereinigt werden kann. Etwaige anfallende Verunreinigungen, die nach dem Reinigungsprozess mittels der Aufbereitungsvorrichtung 9, 9' abgetrennt wurden, können beispielsweise über wenigstens eine Leitung 11 (siehe Figur 2) von bzw. aus dem System 1, 1' entnommen und zur Wiederverwertung außerhalb oder innerhalb des Systems 1, 1' bereitgestellt werden.

Zusätzlich oder alternativ ist es ferner denkbar, dass in der Aufbereitungsvorrichtung 9, 9' dem Wasser Stoffe oder Materialien zugesetzt werden bzw. das Wasser mit diesen Stoffen oder Materialien versetzt wird, welche der Behandlung des Materials 3 in dem Reservoir 2 dienen. Hierzu kann das System 1, 1' vorzugsweise ferner mit wenigsten s einer Zuführleitung 12 ausgestattet sein, die beispielsweise in die Aufbereitungsvorrichtung 9, 9' oder eine Leitung des geschlossenen Wasserkreislaufsystems oder in das Reservoir 2 hineinführt.

Zusätzlich oder alternativ ist es denkbar, dass die Zuführleitung zum Zuführen von Wasser in das System 1, 1' dient, um beispielsweise durch Verdunstung verloren gegangenes Wasser dem System 1, 1' zuzuführen. Auf diese Weise kann ein konstanter Wassergehalt in dem System 1, 1' gewährleistet werden. Auch wenn in der Figur 2 lediglich eine Zuführleitung 12 und eine Abführleitung 11 dargestellt sind, so können auch mehrere Zuführ- und/oder Abführleitungen vorgesehen sein. Wie bereits erläutert, kann auch das in Figur 1 gezeigte System 1 etwaige Zuführleitungen 12 und Abführleitungen 11 aufweisen.

Die in der Aufbereitungsvorrichtung 9, 9' herausgefilterten oder abgesonderten Verunreinigungen können wenigstens zum Teil auch in dem zu behandelnden Material 3 befindliche Chemikalien oder andere Stoffe oder Materialien sein, beispielsweise Quecksilber, welches beim Abbau von Gold in dem Sediment (= Material 3) zurückgeblieben ist. Es ist somit mittels des Systems 1, 1' möglich, diese Stoffe und Materialien aus dem Material 3 herauszuwaschen bzw. herauszulösen, dem System 1, 1' oder wenigstens dem Wasserkreislauf zu entnehmen und somit diese Stoffe für weitere Anwendungen (hier bspw. zum erneuten Auswaschen von Gold) zur Verfügung zu stellen.

Beispielsweise kann zudem der dem Wasser zur Behandlung zugesetzte Stoff oder die Materialien aus den beispielsweise über die Abführleitung 11 abgeführten Verunreinigungen wiedergewonnen und dem System 1, 1', beispielsweise über die Zuführleitung 12, wieder zur Verfügung gestellt werden. Dieser Vorgang kann auch direkt innerhalb der Aufbereitungsvorrichtung 9, 9' bzw. des Systems 1, 1' ablaufen, so dass lediglich eventuell weitere angefallene Verunreinigungen aus dem System 1, 1' abgeführt werden müssen.

Das System 1, 1' weist ferner eine Rückführvorrichtung R auf, die eine Rückführung des aufbereiteten Wassers in das Reservoir 2 ermöglicht. Diese Rückführvorrichtung R kann beispielsweise lediglich wenigstens eine Rückführleitung 13 aufweisen. Neben der Rückführleitung 13 kann nach der Aufbereitung und vor der Zuführung des Wassers in das Reservoir 2 das Wasser jedoch noch weitere Schritte in der Rückführvorrichtung R zur Aufbereitung und/oder Behandlung oder dergleichen in einer verwendeten Anlage durchlaufen, wobei ein geschlossener Wasserkreislauf aufrechterhalten bleibt. Um ein Zurückführen des Wassers zu ermöglichen, weist die Rückführvorrichtung 13 vorzugsweise eine nicht dargestellte Pumpvorrichtung auf; alternativ oder zusätzlich kann hierfür auch die bereits zuvor beschrieben Pumpvorrichtung 8, 8' dienen, die das Durchleiten des Wassers durch das gesamte System ermöglicht.

In den Figuren weist die Rückführleitung 13 an ihrem der Aufbereitungsvorrichtung 9, 9' abgewandten Ende vorzugsweise eine Düse und/oder ein Ventil 14 auf. Mittels einer Düse kann beispielsweise das austretende Wasser gezielt in das Reservoir 2 bzw. auf das Material 3 aufgebracht bzw. verteilt werden; beispielsweise duschkopfartig. Mittels eines zusätzlich oder alternativ vorgesehenen Ventils kann des Weiteren die Zuflussmenge des Wassers in das Reservoir 2 wahlweise und vorzugsweise stufenlos geregelt werden.

Es ist ferner denkbar, dass das System 1, 1' eine Steuervorrichtung (nicht gezeigt) aufweist, mit der das System 1, 1' voll- oder teilautomatisch betrieben werden kann. So ist es beispielsweise möglich, dass im Zusammenspiel mit beliebig vorgesehenen Sensoren automatisch über die Zuführleitung Wasser und/oder mit dem Wasser zu versetzende Stoffe oder Materialien zugeführt, über die Abführleitung 11 Verunreinigungen aus dem System 1, 1' abgeleitet, eine Ventilöffnung oder Düseneinstellung am Ende der Rückführleitung 13 eingestellt, sowie die Abpumpleistung der Wasserentnahmevorrichtung 7 wahlweise eingestellt werden kann. Diese Einstellungen können beispielsweise auf Messergebnissen des Verunreinigungsgrades des Wassers oder dergleichen beruhen.

Um die Behandlung des Materials 3 mit dem beispielsweise mit einem Stoff oder Material versetzten Wasser homogen zu gestalten und die Behandlungsqualität zu steigern, umfasst das System 1, 1' ferner eine oder mehrere Barriereschichten 15, welche innerhalb des Reservoirs 2 angeordnet ist bzw. sind. Die Barriereschicht 15 ist zudem mit mindestens einem Durchlass 16 für Wasser versehen. Abgesehen von dem Durchlass 16, der wasserdurchlässig ist, ist die Barriereschicht 15 aus einem Material gefertigt, welches im Wesentlichen wasserundurchlässig ist. Unter "im Wesentlichen wasserundurchlässig" wird im Rahmen der vorliegenden Erfindung verstanden, dass die Barriereschicht 15 derart ausgebildet ist, dass der Hauptteil des Wassers, welcher durch das Reservoir 2, also das Material 3 sickert, daran gehindert wird, durch die Barriereschicht 15 hindurch in den Bereich oberhalb bzw. unterhalb der Barriereschicht 15 zu gelangen. Die Barriereschicht 15 dient zur Verlängerung des Sickerweges des Wassers durch das Material 3 in dem Reservoirs 2. Durch die Verlängerung des Sickerwegs bleibt das Wasser länger in dem Material 3 und verteilt sich besser über dessen gesamtes Volumen, sodass die Behandlungsqualität deutlich gesteigert werden kann.

Die die Barriereschicht 15 durchstoßenden Leitungen 10 oder Auffangbehälter 4, 4' können derart angeordnet sein, dass sie mit der Barriereschicht 15 in abdichtender, also insbesondere wasserundurchlässiger Weise mit einander verbunden sind. Die Verbindung kann jedoch auch wasserdurchlässig sein, so dass ein kleiner Teil des Wassers (also maximal so viel, dass ein mäanderförmiger Durchfluss des restlichen Wassers entlang des durch die Barriereschicht 15 vorgegebenen Pfades zu einer ausreichenden Behandlung ermöglicht ist) wenigstens teilweise entlang der Leitungen 10 oder Auffangbehälter 4, 4' fließen kann, wodurch das von Wasser durchdrungene Volumen des Materials 3 noch vergrößert werden kann.

Vorzugsweise sind die Barriereschichten 15 im Wesentlichen horizontal angeordnet, da bei dieser Anordnung der Sickerweg des Wassers durch das System 1, 1' am längsten ist, was sich besonders positiv auf die Behandlungsqualität auswirkt. Es ist jedoch auch jede andere Neigung der Barriereschichten 15 möglich, wenn die Eigenschaft der Barriereschicht 15, den Sickerweg des Wassers zu verlängern, beibehalten wird. Die einzelnen Barriereschichten 15 innerhalb des Systems 1, 1' können jeweils den gleichen Neigungsgrad aufweisen, sich aber auch hinsichtlich ihres Neigungsgrads untereinander beliebig unterscheiden.

Der Durchlass 16 für Wasser nimmt, relativ zur gesamten Fläche der Barriereschicht 15, nur einen kleinen Flächenbereich ein. Vorzugsweise handelt es sich hierbei um einen Flächenbereich von 5 bis 20 % bezogen auf die Gesamtfläche der Barriereschicht 15.

Vorzugsweise ist der Durchlass 16 für Wasser an einer ausgewählten Stelle angeordnet. Beispielsweise kann der Durchlass 16 im äußeren Bereich der Barriereschicht 15, also nahe einem Randbereich des Reservoirs 2, angeordnet sein, wie dies auch in Figur 2 dargestellt ist. Der Durchlass 16 für Wasser befindet sich bevorzugt unmittelbar vor dem Ende oder direkt am Ende der Barriereschicht 15, also an oder nahe einem Bereich, wo die Barriereschicht 15 unmittelbaren Kontakt mit dem Reservoir 2 hat. Sickert das Wasser erst in einem Randbereich durch die Barriereschicht 15, so entspricht der Weg, den das Wasser entlang der Barriereschicht 15 zurückgelegt hat, in etwa dem maximal möglichen. Hier ist eine möglichst großflächige Behandlung des Materials 3 besonders gut möglich.

Es ist ferner möglich, über die Anzahl, Größe und/oder Geometrie der Durchlässe 16 die Fließgeschwindigkeit des Wassers durch das System 1, 1' beliebig zu variieren und somit die Behandlung des Materials 3 den Umständen entsprechend anzupassen. Die Durchlässe 16 können in Form von Schlitzen oder Löchern vorliegen, es ist jedoch auch jede andere Ausgestaltungsform denkbar.

Sind wenigstens zwei Barriereschichten 15 vorgesehen, so ist es besonders vorteilhaft, wenn die Durchlässe 16 von jeweils zwei benachbarten Barriereschichten 15 gegeneinander versetzt, besonders bevorzugt entgegengesetzt zueinander angeordnet sind. Durch das versetzte Anordnen der Durchlässe 16 für Wasser wird der Sickerweg des Wassers durch das System 1, 1' verlängert, sodass die Verweildauer des Wassers für eine ausreichende Behandlung innerhalb des Systems 1, 1' gesteigert ist und zudem das Volumen des Materials 3 möglichst großflächig mit Wasser durchdrungen werden kann. In Figur 2 ist mit den Pfeilen der Sickerweg des Wassers durch die Durchlässe 16 der Barriereschichten 15 gezeigt.

In einer besonders bevorzugten Ausführungsform umfasst das Reservoir 2 und/oder die Barriereschicht 15 ein Geotextil. Das Geotextil wiederum umfasst in seiner einfachsten Ausführungsform eine Lage aus einem Gewebe oder Vlies, die besonders vorzugsweise mit Polyurethan durchsetzt ist.

Die Verwendung eines Geotextils hat den Vorteil, dass unerwünschtes Austreten von Wasser sowie Verunreinigungen in dem Reservoir 2 in die Umgebung, beispielsweise in das Grundwasser, besonders effektiv vermieden werden kann. Somit wird auf sichere Weise verhindert, dass belastende Chemikalien oder dergleichen, welche mit dem aufbereiteten Wasser zur Behandlung in das Reservoir 2 transportiert oder aus dem Material 3 abtransportiert werden, in das Grundwasser gelangen können. Dies ist besonders von Vorteil, wenn es sich bei einem System 1, 1' um eine im Außenbereich eingesetzte Anlage handelt oder das System 1, 1' in einer Mine oder einem Bergwerk vorgesehen ist.

Ein weiterer Vorteil des Geotextil ist, dass es thermische Änderungen und mechanisch bedingte Verschiebungen im Gefüge des Bodens (z.B. bei einem Erdbeben) in der Regel standhält und es somit zu keiner Zerstörung des wasserundurchlässigen Reservoirs 2 kommt. Durch seine Stabilität und Witterungsbeständigkeit ist es auch nach längerer Gebrauchszeit gegenüber Beschädigungen durch Wurzeln oder spitze Steine resistent.

Es ist außerdem von Vorteil, dass sich die äußere Form des Geotextils an das Gelände vor Ort anpassen lässt, insbesondere dann, wenn das System 1, 1' im Außenbereich eingesetzt wird. Ein Reservoir, welches ein Geotextil umfasst, kann folglich äußert flexibel eingesetzt werden. Dies spart wiederum Zeit und zusätzliche Kosten für Bauarbeiten.

Das für das Geotextil verwendete Vlies kann beispielsweise zusätzlich Drähte oder auch flächige Gebilde aus Elastomeren/ Polymeren, vorwiegend aus natürlichen Rohstoffen, aufweisen. Ferner können Spinnfasern mit einer Länge von mehreren Zentimetern beispielsweise aus Kunststoff vorgesehen sein. Die Spinnfasern und gegebenenfalls Drähte und/oder Blättchen können so aneinandergefügt werden, dass die Festigkeit des Vlieses bzw. Geotextils richtungsunabhängig ist. Dadurch wird eine im Boden flexible Flächenausbildung mit guter Anpassung an den gegebenen Untergrund ohne Gefahr von Beschädigungen des Gefüges erreicht.

Umfasst das Geotextil ein Gewebe, so dient dieses Gewebe aus kreuzenden Fäden und Fasersystemen (Fasergewebe) vorzugsweise ausschließlich als Bewährung sowie zur Aufnahme des Polyurethans. Bezüglich der Herstellung und Anbringung eines Geotextils in einem Reservoir 2 bzw. als Barriereschicht 15 wird auf die EP 2 058 441 verwiesen.

Das Reservoir ist nicht auf ein Geotextil beschränkt, um es wasserundurchlässig und nach außen abgegrenzt auszubilden. Vielmehr sind auch andere Materialien oder auch die natürlichen Begebenheiten in der Umgebung des Systems 1, 1' (beispielsweise Auqifugen in einer geologischen Schicht) für den gewünschten Effekt denkbar. Außerdem kann das Reservoir auch durch eine künstliche Auffangwanne aus einem für die einzusetzenden Materialien und Stoffe resistenten Material hergestellt sein.

In einer besonders bevorzugten Ausführungsform ist das System 1, 1' ferner mit natürlichen und/oder künstlich angelegten Flächen oder Grünflächen funktional verbunden. Es ist somit möglich, beispielsweise eine Hotel- oder Industrieanlage oder jedweden anderen flüssigkeits- bzw. wasserverbrauchenden Komplex ein eigenes, autonomes Flüssigkeits- bzw. Wasserwirtschafts- und Flüssigkeits- bzw. Wasserreinigungssystem unter funktionaler Einbeziehung der externen natürlichen oder künstlichen Flächen, beispielsweise eines Golfplatzes oder einer Parkanlage des Hotels, als notwendige "Kläranlage" bereitzustellen.

Besonders vorzugsweise sind die zum System 1, 1' gehörenden Flächen oder Gebiete flüssigkeitstechnisch von ihrem natürlichen Umfeld hermetisch separiert. Auf diese Weise ist es möglich, das System 1, 1' bzw. die Anlage separat zu bewirtschaften.

Im Rahmen der Erfindung ist es zur Behandlung radioaktiv verunreinigter Materialien 3 besonders vorteilhaft, wenn das Reservoir 2 in Tongesteinen vorgesehen ist, wie sie bspw. in der Opalinuston-Formation im Jura vorliegen. Dies ist insbesondere bei urankontaminierten Materialien 3 aus Minen (bspw. der Mine, in dem das Reservoir 2 vorgesehen ist) oder anderen radioaktiv verunreinigten Materialien 3 von besonderem Vorteil. Die in dem Ton enthaltenen Tonminerale (bspw. Kaolinit) dienen dabei der Bindung der radioaktiven Stoffe, die somit aus dem zur Behandlung der Materialien 3 verwendeten Wasser gereinigt werden können, welches bspw. zuvor die radioaktiven Stoffe aus dem Material 3 gewaschen hat. Im Zusammenspiel mit den im Tongestein enthaltenen Eisenmineralien, die eine Reduktion der radioaktiven Stoffe und somit das Festsetzen derselben im Tongestein bewirken, kann die Reinigung von Materialien 3 in dem Reservoir 2 noch gesteigert werden.

Es ist zusätzlich oder alternativ möglich, dass die Wände des Reservoirs 2 mit natürlichem Ton (insbesondere enthaltend Tonminerale) zu Reinigungszwecken des Materials 3 bzw. des zur Behandlung der Materialien 3 verwendeten Wassers versehen werden. Dazu kann eine Tonschicht auf die Innenwände des Reservoirs 2 aufgebracht werden, insbesondere wenn das Reservoir 2 (bspw. eine Mine) nicht in Tongestein vorgesehen ist. Die Tonschicht kann, hat diese ausreichend radioaktive Stoffe gebunden bzw. ist diese mit radioaktiven Stoffen gesättigt, abgetragen und umweltgerecht entsorgt bzw. gelagert oder aufbereitet werden. Ist das Reservoir 2 in Tongestein vorgesehen, so kann bspw. die äußerste Tonschicht der Innenwände des Reservoirs 2 in regelmäßigen Abständen abgetragen und entsprechend entsorgt oder aufbereitet werden, um die stark kontaminierten Tonschichten zu entfernen und die Reinigung mit einer "frischen" Tonschicht, die ggf. neu aufgetragen werden kann, fortzuführen.

Ferner ist es denkbar, dass mittels des Einsatzes von Ton absorbierende Trennwände, Trennschichten oder Reinigungsschichten (aus Ton oder Tongestein) im System vorgesehen werden. Hierzu werden die aus Ton(gestein) gebildeten Trennwände, Trennschichten oder Reinigungsschichten vorzugsweise an Stellen in dem System oder auch separat, also bspw. außerhalb des Reservoirs 2, dort vorgesehen, wo (kontaminierte) Materialien 3 und/oder Wasser anliegen bzw. hindurchfließen.

Auf die Ausführungsbeispiele bezogen bedeutet das, dass bspw. in dem Auffangbehälter 4, 4', in der Aufbereitungsvorrichtung 9, 9' oder in den Leitungen 10, 11, 13 oder an sonstigen geeigneten Stellen des Systems 1, 1' Trennwände, Trennschichten oder Reinigungsschichten aus Ton vorgesehen sein können. Beispielsweise kann auch die Barriereschicht 15 oder die Aufbereitungsvorrichtung 9, 9' an sich aus einem entsprechenden Ton gebildet sein. Ebenso ist es denkbar, zusätzliche Barriereschichten aus Ton als Trennwände und Reinigungsvorrichtung, insbesondere für mit radioaktiven Stoffen verunreinigtes Wasser, vorzusehen. Beispielsweise können die Öffnungen 5 oder der Durchlass 16 mit Ton ausgefüllt sein, so dass das Wasser beim Durchtritt durch die Öffnung 5 bzw. den Durchlass 16 durch den Ton hindurchfließen muss, also gefiltert und somit von radioaktiven Stoffen gereinigt wird.

Es ist überdies denkbar, Ton als Filterelement, bspw. als lose Tonpartikel, in dem System vorzusehen, so dass dieser mit dem Material 3 oder dem das Material 3 behandelnden kontaminierten Wasser in Verbindung kommt und die in dem Material 3 enthaltenen bzw. aus dem Material 3 gewaschenen und in dem Wasser abgeführten radioaktiven Stoffe binden kann. Mit anderen Worten muss der Ton nicht als Schicht oder Wand vorliegen, sondern kann in jeglicher Form vorgesehen werden, bspw. "fest" (als Tonplatten oder Tonklumpen), "fest angeordnet" (als Trennschicht oder Trennwand), "lose geordnet" (als Filterpartikel in einem (begrenzten) Filtergehäuse) oder "lose willkürlich" (bspw. aufgeschlämmt in dem kontaminierten Material 3 oder Wasser). Vorzugsweise ist der Ton bzw. das Tongestein so vorgesehen, dass es wahlweise ausgewechselt oder abgetragen werden kann, wenn eine vorbestimmte Menge an kontaminierten (radioaktiven) Stoffen darin gebunden ist. Auf diese Weise wird eine effektive Reinigungsvorrichtung für insbesondere radioaktiv kontaminierte Materialien 3 bereitgestellt.

Im Folgenden wird ein Verfahren zur geschlossenen Wasserkreislaufführung gemäß der Erfindung beschrieben.

Gemäß der Erfindung weist das Verfahren zur geschlossenen Wasserkreislaufführung folgende Schritte auf:

In einem ersten Schritt wird ein in dem wasserundurchlässigen und nach außen abgegrenzten Reservoir 2 vorgesehenes oder angeordnetes Material 3 mittels Wasser behandelt. Das Behandeln kann beispielsweise das Auswaschen von Verunreinigungen aus dem Material 3 umfassen. In einem zweiten Schritt wird das Wassers in einem im Wesentlichen in der oder in Nähe der Sohle des Reservoirs 2 angeordneten Auffangbehälter 4, 4' aufgefangen, wobei der Auffangbehälter 4, 4' wenigstens eine Öffnung 5 aufweist, durch die das Wasser in den Auffangbehälter 4, 4' fließt. In einem dritten Schritt wird das in dem Auffangbehälter 4, 4' gesammelte Wasser aus dem Reservoir 2 mittels einer Wasserentnahmevorrichtung 7 entnommen. Hierzu kann die Wasserentnahmevorrichtung 7 eine Pumpvorrichtung aufweisen, mittels der das Wasser aus dem Auffangbehälter zur Aufbereitungsvorrichtung 9, 9' und vorzugsweise weiter über die Rückführvorrichtung R bzw. Rückführleitung 13 bis zurück ins Reservoir 2 geleitet wird. In einem vierten Schritt wird das aus dem Reservoir 2 entnommene Wasser in einer Aufbereitungsvorrichtung 9, 9' aufbereitet. Die Aufbereitung umfasst vorzugsweise das Versetzen des Wassers mit einem für die Behandlung benötigten Stoff oder Material, oder die Reinigung des Wassers durch Absondern eines das Wasser in dem Reservoir 2 verunreinigenden Stoffes oder Materials. In einem letzten Schritt wird das aufbereitete Wasser in das Reservoir 2 über eine Rückführvorrichtung R zurückgeführt.

Es kann ein System zur geschlossenen Wasserkreislaufführung bereitgestellt werden, welches folgendes aufweist: ein wasserundurchlässiges und nach außen abgegrenztes Reservoir 2 zum Auffangen von Wasser, wobei in dem Reservoir 2 ein Material 3 vorgesehen und/oder angeordnet ist, welches mit dem Wasser zu behandeln ist, einen Auffangbehälter 4, 4', welcher im Wesentlichen in der oder in Nähe der Sohle des Reservoirs 2 angeordnet ist, wobei der Auffangbehälter 4, 4' wenigstens eine Öffnung 5 aufweist, durch die das Wasser fließen kann, eine Wasserentnahmevorrichtung 7 zur Entnahme des in dem Auffangbehälter 4, 4' gesammelten Wassers aus dem Reservoir 2, eine Aufbereitungsvorrichtung 9, 9', die ausgebildet ist, das dem Reservoir 2 entnommene Wasser zur Wiederverwendung in dem System 1, 1' aufzubereiten, und eine Rückführvorrichtung R, die ausgebildet ist, das aufbereitete Wasser in das Reservoir 2 zurückzuführen.

Das Material 3 kann ein das Reservoir 2 wenigstens teilweise auffüllendes Schüttgut oder ein die Innenwand des Reservoirs 2 wenigstens teilweise bedeckendes Material sein.

Der Auffangbehälter 4, 4' kann sich in dem Reservoir 2 von dessen Boden nach oben mindestens bis oberhalb des zu behandelnden Materials 3 in dem Reservoir 2 erstrecken, wobei der Auffangbehälter 4, 4' oberhalb des Materials 3 eine zweite Öffnung 6 aufweisen kann, durch die das Wasser entnehmbar ist. Der Auffangbehälter 4, 4' kann ein Brunnen oder ein spanischer Reiter sein.

Die Wasserentnahmevorrichtung 7 kann eine Pumpvorrichtung 8, 8' aufweisen.

Das Reservoir 2 kann wenigstens ein Auffangbecken oder künstliche oder natürliche Höhlen, wie bspw. Minen und Bergwerke, aufweisen.

Das Reservoir 2 kann eine Wannen-, Halbkugel- oder Höhlenform aufweisen.

Das Reservoir 2 kann ein Geotextil umfassen.

Das Wasser kann mit Stoffen oder Materialien versetzt sein, welche der Behandlung des Materials 3 in dem Reservoir 2 dienen und die dem Wasser in der Aufbereitungsvorrichtung 9, 9' zuführbar sind.

Die Aufbereitungsvorrichtung 9, 9' kann eine Reinigungsvorrichtung aufweisen, die derart ausgebildet ist, das in dem Reservoir 2 verunreinigte Wasser zu reinigen, wobei vorzugsweise die Verunreinigungen über wenigstens eine Abführleitung 11 aus dem System 1, 1' zur Wiederverwertung entnehmbar sind.

Das System kann ferner wenigstens eine Zuführleitung 12 zum Zuführen von Wasser und/oder dem Wasser zuzusetzenden Stoffen aufweisen.

Das System 1, 1' kann ferner mit natürlichen und/oder künstlich angelegten Flächen und/oder Grünflächen funktional verbunden sein.

Die zum System 1, 1' gehörenden Flächen oder Gebiete können flüssigkeits- bzw. wassertechnisch von ihrem natürlichen Umfeld hermetisch separiert sein derart, dass sie separiert bewirtschaftet werden können.

Es kann ferner eine Anlage für industrielle, agrarische, agrarindustrielle oder landschaftsbauliche Maßnahmen bereitgestellt sein, welche ein System 1, 1' gemäß der Erfindung aufweist.

Ferner kann ein Verfahren zur geschlossenen Flüssigkeitskreislaufführung bereitgestellt sein, welches die folgenden Schritte aufweist:
- Behandeln eines in einem flüssigkeitsundurchlässigen und nach außen abgegrenzten Reservoir 2 vorgesehenen oder angeordneten Material 3 mittels flüssigem Behandlungsmedium, ,
- Auffangen des flüssigen Behandlungsmediums in einem im Reservoir im Wesentlichen in der oder in Nähe der Sohle des Reservoirs 2 angeordneten Auffangbehälter 4, 4', wobei der Auffangbehälter 4, 4' wenigstens eine Öffnung 5 aufweist, durch die das flüssige Behandlungsmedium in den Auffangbehälter 4, 4' fließt,
- Entnehmen des in dem Auffangbehälter 4, 4' gesammelten flüssigen Behandlungsmediums aus dem Reservoir 2 mittels einer Flüssigkeitsentnahmevorrichtung 7,
- Aufbereiten des aus dem Reservoir 2 entnommenen flüssigen Behandlungsmediums in einer Aufbereitungsvorrichtung 9, 9', und
- Zurückführen des aufbereiteten flüssigen Behandlungsmediums in das Reservoir 2 über eine Rückführvorrichtung R.

Die Behandlung des Materials 3 kann das Auswaschen von Verunreinigungen aus dem Material umfassen.

Die Flüssigkeitsentnahmevorrichtung 7 kann eine Pumpvorrichtung 8, 8' aufweisen, mittels der das flüssige Behandlumgsmedium aus dem Auffangbehälter 4, 4' zur Aufbereitungsvorrichtung 9, 9' und vorzugsweise weiter über die Rückführvorrichtung R bis zurück ins Reservoir 2 geleitet werden kann.

Die Aufbereitung kann das Versetzen des flüssigen Behandlumgsmediums mit einem für die Behandlung benötigten Stoff oder Material, oder die Reinigung des flüssigen Behandlumgsmediums durch Absondern eines das flüssige Behandlumgsmedium in dem Reservoir 2 verunreinigenden Stoffes oder Materials umfassen.

Die Erfindung ist nicht auf die zuvor beschriebenen Ausführungsbeispiele beschränkt. Vielmehr können die darin beschriebenen Beispiele kombiniert werden.

So ist die Erfindung beispielsweise nicht auf eine bestimmte Anzahl an Reservoirs je System beschränkt. Ferner kann die Rückführung des flüssigen Behandlumgsmediums beliebig gestaltet sein. Ferner ist die Anordnung der Pumpvorrichtung nicht beschränkend; vielmehr ist die Pumpvorrichtung derart angeordnet, dass sie ein Durchleiten des flüssigen Behandlumgsmediums wenigstens von dem Auffangbehälter über die Aufbereitungsvorrichtung und ggf. zurück in das Reservoir ermöglicht, wobei ein dafür ggf. notwendiges Leitungssystem beliebig ausgestaltet sein kann. Auch das in dem Reservoir 2 vorgesehene und zu behandelnde Material ist erfindungsgemäß nicht beschränkt.

Es ist überdies denkbar, dass mehrere der erfindungsgemäßen Systeme zu einem Komplex zusammengeschaltet werden, der einen geschlossenen Flüssigkeitskreislauf hat. Dabei kann eine Stufenweise Behandlung von flüssigem Behandlumgsmedium oder Material 3 oder parallel verschiedene Abläufe durchgeführt werden.

Ferner ist es denkbar, dass aus den in einem System gewonnenen Verunreinigungen Stoffe extrahiert werden können bzw. die Verunreinigungen Stoffe darstellen, die diesem oder einem nachgeschalteten erfindungsgemäßen System zugeführt werden können, insbesondere dem flüssigen Behandlumgsmedium zur Behandlung eines weiteren oder desselben Materials 3.

Das flüssige Behandlungsmedium kann Wasser sein, wobei die Erfindung hierauf nicht beschränkt ist.

## Patentansprüche

1. Offenes System zur geschlossenen Flüssigkeitskreislaufführung, aufweisend:
ein flüssigkeitsundurchlässiges und nach außen abgegrenztes Reservoir (2) zum Auffangen von flüssigen Behandlungsmedien, wobei in dem Reservoir (2) ein Material (3) vorgesehen und/oder angeordnet ist, welches mit dem flüssigen Behandlungsmedium zu behandeln ist,
einen Auffangbehälter (4, 4'), welcher im Reservoir (2) im Wesentlichen in der oder in Nähe der Sohle des Reservoirs (2) angeordnet ist, wobei der Auffangbehälter (4, 4') wenigstens eine Öffnung (5) aufweist, durch die das flüssige Behandlungsmedium fließen kann,
eine Flüssigkeitsentnahmevorrichtung (7) zur Entnahme des in dem Auffangbehälter (4, 4') gesammelten flüssigen Behandlungsmediums aus dem Reservoir (2),
eine Aufbereitungsvorrichtung (9, 9'), die ausgebildet ist, das dem Reservoir (2) entnommene flüssige Behandlungsmedium zur Wiederverwendung in dem System (1, 1') aufzubereiten, und
eine Rückführvorrichtung (R), die ausgebildet ist, das aufbereitete flüssige Behandlungsmedium in das Reservoir (2) zurückzuführen.

2. Offenes System nach Anspruch 1, wobei das flüssige Behandlungsmedium Wasser ist, wobei das flüssige Behandlungsmedium bzw. Wasser vorzugsweise mit Stoffen oder Materialien versetzt ist, welche der Behandlung des Materials (3) in dem Reservoir (2) dienen und die dem flüssigen Behandlungsmedium bzw. Wasser in der Aufbereitungsvorrichtung (9, 9') zuführbar sind.

3. Offenes System nach Anspruch 1 oder 2, wobei das Material (3) ein das Reservoir (2) wenigstens teilweise auffüllendes Schüttgut oder ein die Innenwand des Reservoirs (2) wenigstens teilweise bedeckendes Material ist.

4. Offenes System nach einem der vorhergehenden Ansprüche, wobei sich der Auffangbehälter (4, 4') in dem Reservoir (2) von dessen Boden nach oben mindestens bis oberhalb des zu behandelnden Materials (3) in dem Reservoir (2) erstreckt, wobei der Auffangbehälter (4, 4') oberhalb des Materials (3) eine zweite Öffnung (6) aufweist, durch die das flüssige Behandlungsmedium entnehmbar ist.

5. Offenes System nach einem der vorhergehenden Ansprüche, wobei die Flüssigkeitsentnahmevorrichtung (7) eine Pumpvorrichtung (8, 8') aufweist.

6. Offenes System nach einem der vorhergehenden Ansprüche, wobei das Reservoir (2) wenigstens ein Auffangbecken aufweist, welches vorzugsweise nach oben offen ist, wobei das Reservoir (2) vorzugsweise eine Wannen- oder Halbkugelform aufweist.

7. Offenes System nach einem der vorhergehenden Ansprüche, wobei das Reservoir (2) ein Geotextil umfasst.

8. Offenes System nach einem der vorhergehenden Ansprüche, wobei die Aufbereitungsvorrichtung (9, 9') eine Reinigungsvorrichtung aufweist, die derart ausgebildet ist, das in dem Reservoir (2) verunreinigte flüssige Behandlungsmedium zu reinigen, wobei vorzugsweise die Verunreinigungen über wenigstens eine Abführleitung (11) aus dem System (1, 1') zur Wiederverwertung entnehmbar sind.

9. Offenes System nach einem der vorhergehenden Ansprüche, ferner aufweisend wenigstens eine Zuführleitung (12) zum Zuführen von flüssigem Behandlungsmedium und/oder dem flüssigen Behandlungsmedium zuzusetzenden Stoffen.

10. Offenes System nach einem der vorhergehenden Ansprüche, wobei die Aufbereitungsvorrichtung (9, 9') fließtechnisch dem Auffangbehälter (4, 4') nachgeschaltet ist, vorzugsweise außerhalb des Reservoirs (2) angeordnet ist.

11. Offenes System nach einem der vorhergehenden Ansprüche, wobei Ton als Filterelement, insbesondere als lose Tonpartikel, in dem System vorgesehen sind, derart, dass die Tonpartikel mit dem Material oder dem das Material behandelnden kontaminierten flüssigen Behandlungsmedium in Verbindung kommt, um in dem Material enthaltene bzw. aus dem Material gewaschene und in dem flüssigen Behandlungsmedium abgeführte Stoffe zu binden.

12. Offenes System nach einem der vorhergehenden Ansprüche, wobei das Reservoir (2) in Tongestein vorgesehen ist, und/oder wobei die Wände des Reservoirs (2) mit natürlichem Ton zu Reinigungszwecken des Materials (3) beziehungsweise des zur Behandlung des Materials (3) verwendeten flüssigen Behandlungsmediums versehen sind, und
wobei das Tongestein oder der Ton derart vorgesehen sind, dass es/er wahlweise abgetragen oder ausgewechselt werden kann.

13. Offenes System nach einem der vorhergehenden Ansprüche, wobei der geschlossene Flüssigkeitskreislauf derart ausgebildet ist, dass das mittels der Flüssigkeitsentnahmevorrichtung (7) aus dem Auffangbehälter (4, 4') zur Aufbereitungsvorrichtung (9, 9') geleitete flüssige Behandlungsmedium weiter über die Rückführvorrichtung (R) bis zurück in das Reservoir (2) geleitet wird,
wobei die Rückführvorrichtung (R) vorzugsweise eine Rückführleitung (13) aufweist, wobei die Rückführleitung (13) an ihrem der Aufbereitungsvorrichtung (9, 9') abgewandten Ende vorzugsweise eine Düse und/oder ein Ventil (14) aufweist.

14. Offenes System nach einem der vorhergehenden Ansprüche, wobei das System (1, 1') ferner mit natürlichen und/oder künstlich angelegten Flächen und/oder Grünflächen funktional verbunden ist, wobei die zum System (1, 1') gehörenden Flächen oder Gebiete vorzugsweise wassertechnisch von ihrem natürlichen Umfeld hermetisch separiert sind derart, dass sie separiert bewirtschaftet werden können.

15. Verfahren zur geschlossenen Flüssigkeitskreislaufführung, aufweisend die folgenden Schritte:
• Behandeln eines in einem flüssigkeitsundurchlässigen und nach außen abgegrenzten Reservoir (2) vorgesehenen oder angeordneten Material (3) mittels flüssigem Behandlungsmedium, vorzugsweise durch Auswaschen von Verunreinigungen aus dem Material (3),
• Auffangen des flüssigen Behandlungsmediums in einem im Reservoir (2) im Wesentlichen in der oder in Nähe der Sohle des Reservoirs (2) angeordneten Auffangbehälter (4, 4'), wobei der Auffangbehälter (4, 4') wenigstens eine Öffnung (5) aufweist, durch die das flüssige Behandlungsmedium in den Auffangbehälter (4, 4') fließt,
• Entnehmen des in dem Auffangbehälter (4, 4') gesammelten flüssigen Behandlungsmediums aus dem Reservoir (2) mittels einer Flüssigkeitsentnahmevorrichtung (7),
• Aufbereiten des aus dem Reservoir (2) entnommenen flüssigen Behandlungsmediums in einer Aufbereitungsvorrichtung (9, 9'), und
• Zurückführen des aufbereiteten flüssigen Behandlungsmediums in das Reservoir (2) über eine Rückführvorrichtung (R).

## Claims

1. Open system for conveying liquid in a closed circuit, comprising:
- a water-impermeable and outwardly delimited reservoir (2) for collecting liquid treatment media, a material (3) which is to be treated with the liquid treatment medium being provided and/or arranged in the reservoir (2),
- a collecting tank (4, 4') which is arranged in the reservoir (2) substantially in or close to the base of the reservoir (2), the collecting tank (4, 4') having at least one opening (5) through which the liquid treatment medium can flow,
- a liquid draining apparatus (7) for draining the liquid treatment medium that has collected in the collecting tank (4, 4') from the reservoir (2),
- a treatment apparatus (9, 9') which is configured to treat the liquid treatment medium drained from the reservoir (2) for re-use in the system (1, 1'), and
- a recycling apparatus (R) which is configured to recycle the treated liquid treatment medium into the reservoir (2).

2. Open system according to claim 1, wherein the liquid treatment medium is water, the liquid treatment medium or water preferably being combined with substances or materials which serve to treat the material (3) in the reservoir (2) and which can be fed into the liquid treatment medium or water in the treatment apparatus (9, 9').

3. Open system according to claim 1 or 2, wherein the material (3) is a bulk material that at least partially fills the reservoir (2) or a material that at least partially covers the inner wall of the reservoir (2).

4. Open system according to one of the preceding claims, wherein the collecting tank (4, 4') in the reservoir (2) extends upwards from the base thereof to at least above the material (3) that is to be treated in the reservoir (2), the collecting tank (4, 4') comprising a second opening (6) above the material (3), through which the liquid treatment medium can be drained off.

5. Open system according to one of the preceding claims, wherein the liquid draining apparatus (7) comprises a pumping apparatus (8, 8').

6. Open system according to one of the preceding claims, wherein the reservoir (2) comprises at least one collecting basin which is preferably open at the top, the reservoir (2) preferably being tub-shaped or hemispherical in shape.

7. Open system according to one of the preceding claims, wherein the reservoir (2) includes a geotextile.

8. Open system according to one of the preceding claims, wherein the treatment apparatus (9, 9') comprises a purification apparatus that is configured so as to purify the liquid treatment medium that has been contaminated in the reservoir (2), while preferably the contaminants can be removed from the system (1, 1') through at least one discharge pipe (11) for reutilisation.

9. Open system according to one of the preceding claims, further comprising at least one supply pipe (12) for supplying liquid treatment medium and/or substances that are to be added to the liquid treatment medium.

10. Open system according to one of the preceding claims, wherein the treatment apparatus (9, 9') is connected fluidically downstream of the collecting tank (4, 4'), and is preferably arranged outside the reservoir (2).

11. Open system according to one of the preceding claims, wherein clay is provided in the system as a filter element, particularly in the form of loose clay particles, such that the clay particles come into contact with the material or the contaminated liquid treatment medium being used to treat the material, so as to bind substances contained in the material or washed out of the material and discharged in the liquid treatment medium.

12. Open system according to one of the preceding claims, wherein the reservoir (2) is provided in argillaceous rock and/or the walls of the reservoir (2) are provided with natural clay for the purpose of purifying the material (3) or the liquid treatment medium used to treat the material (3), and
wherein the argillaceous rock or the clay are provided such that they can be selectively removed or exchanged.

13. Open system according to one of the preceding claims, wherein the closed circuit for liquid is configured so that the liquid treatment medium conveyed out of the collecting tank (4, 4') to the treatment apparatus (9, 9') by means of the liquid draining apparatus (7) is conveyed on through the recycling apparatus (R) back into the reservoir (2),
the recycling apparatus (R) preferably comprising a recycling pipe (13), the recycling pipe (13) preferably having a nozzle and/or a valve (14) at its end remote from the treatment apparatus (9, 9').

14. Open system according to one of the preceding claims, wherein the system (1, 1') is also functionally connected to natural and/or artificially created surfaces and/or green surfaces, the surfaces or areas belonging to the system (1, 1') preferably being hermetically separated from their natural environment by water technology so that they can be managed separately.

15. Method for conveying liquid in a closed circuit, comprising the following steps:
• treating a material (3) that is provided or arranged in a liquid-impermeable and outwardly delimited reservoir (2) using liquid treatment medium, preferably by washing contaminants out of the material,
• collecting the liquid treatment medium in a collecting tank (4, 4') arranged in the reservoir (2) substantially in or close to the base of the reservoir (2), the collecting tank (4, 4') comprising at least one opening (5) through which the liquid treatment medium flows into the collecting tank (4, 4'),
• draining the liquid treatment medium that has collected in the collecting tank (4, 4') from the reservoir (2) by means of a liquid draining apparatus (7),
• treating the liquid treatment medium drained off from the reservoir (2) in a treatment apparatus (9, 9'), and
• recycling the treated liquid treatment medium into the reservoir (2) through a recycling apparatus (R).

## Revendications

1. Système ouvert pour réaliser un cycle du liquide fermé, présentant : un réservoir imperméable aux liquides et délimité vers l'extérieur (2) pour recueillir des milieux de traitement liquides, dans lequel est prévue et / ou est disposée dans le réservoir (2) une matière (3) qui doit être traitée avec le milieu de traitement liquide, un collecteur (4, 4'), lequel est disposé dans le réservoir (2) essentiellement dans ou à proximité de la base du réservoir (2), dans lequel le collecteur (4, 4') présente au moins une ouverture (5) à travers laquelle le milieu de traitement liquide peut couler, un dispositif de prélèvement de liquide (7) pour prélever dans le réservoir (2) le milieu de traitement liquide amassé dans le collecteur (4, 4'), un dispositif de traitement (9, 9') qui est conçu pour traiter le milieu de traitement liquide prélevé dans le réservoir (2) pour une réutilisation dans le système (1, 1'), et un dispositif de retour (R) qui est conçu pour ramener le milieu de traitement liquide traité dans le réservoir (2).

2. Système ouvert selon la revendication 1, dans lequel le milieu de traitement liquide est de l'eau, dans lequel le milieu de traitement liquide, respectivement l'eau, est mélangé de préférence à des substances ou des matières qui servent au traitement de la matière (3) dans le réservoir (2) et qui peuvent être amenées au milieu de traitement liquide respectivement à l'eau dans le dispositif de traitement (9, 9').

3. Système ouvert selon la revendication 1 ou 2, dans lequel la matière (3) est un produit en vrac remplissant au moins partiellement le réservoir (2) ou une matière couvrant au moins partiellement la paroi intérieure du réservoir (2).

4. Système ouvert selon l'une des revendications précédentes, dans lequel le collecteur (4, 4') situé dans le réservoir (2) s'étend de sa base vers le haut au moins jusqu'à au-dessus de la matière à traiter (3) dans le réservoir (2), dans lequel le collecteur (4, 4') présente au-dessus de la matière (3) une deuxième ouverture (6) à travers laquelle peut être prélevé le milieu de traitement liquide.

5. Système ouvert selon l'une des revendications précédentes, dans lequel le dispositif de prélèvement de liquide (7) présente un dispositif formant pompe (8, 8').

6. Système ouvert selon l'une des revendications précédentes, dans lequel le réservoir (2) présente au moins une cuvette de rétention, laquelle est ouverte de préférence vers le haut, dans lequel le réservoir (2) présente de préférence une forme de cuve ou d'hémisphère.

7. Système ouvert selon l'une des revendications précédentes, dans lequel le réservoir (2) comprend un géotextile.

8. Système ouvert selon l'une des revendications précédentes, dans lequel le dispositif de traitement (9, 9') présente un dispositif de nettoyage qui est conçu de manière à nettoyer le milieu de traitement liquide souillé dans le réservoir (2), dans lequel de préférence les impuretés peuvent être prélevées du système (1, 1') au moyen d'au moins une conduite d'évacuation (11) aux fins de recyclage.

9. Système ouvert selon l'une des revendications précédentes, présentant en plus au moins une conduite d'amenée (12) pour amener un milieu de traitement liquide et / ou des substances s'ajoutant au milieu de traitement liquide.

10. Système ouvert selon l'une des revendications précédentes, dans lequel le dispositif de traitement (9, 9') est disposé en termes de technique d'écoulement en aval du collecteur (4, 4'), de préférence à l'extérieur du réservoir (2).

11. Système ouvert selon l'une des revendications précédentes, dans lequel de l'argile est prévue comme élément filtrant, en particulier sous forme de particules d'argile en vrac, de telle manière que la particule d'argile entre en liaison avec la matière ou le milieu de traitement liquide contaminé traitant la matière, afin de lier les substances contenues dans la matière respectivement lavées de la matière et celles évacuées dans le milieu de traitement.

12. Système ouvert selon l'une des revendications précédentes, dans lequel le réservoir (2) est prévu en roche argileuse, et /ou dans lequel les parois du réservoir (2) sont dotées d'argile naturelle aux fins de nettoyage de la matière (3) respectivement du milieu de traitement liquide utilisé pour le traitement de la matière (3), et dans lequel la roche argileuse ou l'argile est prévue de manière telle qu'elle peut être au choix enlevée ou échangée.

13. Système ouvert selon l'une des revendications précédentes, dans lequel le cycle de liquide fermé est conçu de manière telle que le milieu de traitement liquide guidé, au moyen du dispositif de prélèvement de liquide (7), du collecteur (4, 4') au dispositif de traitement (9, 9') est guidé plus loin via le dispositif de retour (R) en retour jusque dans le réservoir (2), dans lequel le dispositif de retour (R) présente de préférence une conduite de retour (13), dans lequel la conduite de retour (13) présente sur son extrémité opposée au dispositif de traitement (9, 9'), de préférence, une buse et / ou une soupape (14).

14. Système ouvert selon l'une des revendications précédentes, dans lequel le système (1, 1') est en outre relié de façon fonctionnelle à des sites naturels et / ou aménagés et / ou des espaces verts, dans lequel les sites ou zones appartenant au système (1, 1') sont de préférence séparés hermétiquement, en termes de technique de l'eau, de leur environnement naturel de manière telle qu'ils peuvent être gérés séparément.

15. Procédé pour réaliser un cycle du liquide fermé, comprenant les étapes suivantes :
• traitement d'une matière (3) prévue ou disposée dans un réservoir imperméable aux liquides et délimité vers l'extérieur (2) à l'aide d'un milieu de traitement liquide, de préférence par lixivation des impuretés hors de la matière (3),
• collecte du milieu de traitement liquide dans un collecteur (4, 4') disposé dans le réservoir (2) essentiellement dans ou à proximité de la base du réservoir (2), dans lequel le collecteur (4, 4') présente au moins une ouverture (5), à travers laquelle le milieu de traitement liquide coule dans le collecteur (4, 4'),
• prélèvement dans le réservoir (2) du milieu de traitement liquide amassé dans le collecteur (4, 4') à l'aide d'un dispositif de prélèvement de liquide (7),
• traitement du milieu de traitement liquide prélevé dans le réservoir (2) dans un dispositif de traitement (9, 9'), et
• renvoi du milieu de traitement liquide traité dans le réservoir (2) via un dispositif de retour (R).
